# EUROPEAN PATENT SPECIFICATION

(11) **EP 3 597 507 B1**
(45) Date of publication and mention of the grant of the patent: **01.12.2021**
(21) Application number: 18778146.3
(22) Date of filing: 27.03.2018
(51) Int. Cl.: B62D 1/185

(54) **STEERING DEVICE**
LENKVORRICHTUNG
DISPOSITIF DE DIRECTION

(30) Priority: 27.03.2017 JP 2017061469; 30.06.2017 JP 2017129203
(43) Date of publication of application: 22.01.2020
(73) Proprietor: NSK Ltd., Tokyo 141-8560 (JP)
(72) Inventor: HARADA, Kazuyuki, Maebashi-shi Gunma 371-8527 (JP); IWAKAWA, Masato, Maebashi-shi Gunma 371-8527 (JP); HARA, Kazuki, Maebashi-shi Gunma 371-8527 (JP)
(74) Representative: Müller-Boré & Partner Patentanwälte PartG mbB
(86) International application number: PCT/JP2018/012420
(87) International publication number: WO 2018/181304

(56) References cited:
- EP-A1- 2 450 254
- WO-A1-2015/064345
- JP-A- 2008 213 521
- JP-A- 2015 157 502
- JP-A- 2016 060 297
- JP-A- 2016 060 297
- JP-B2- 5 428 582
- US-A- 5 481 937
- US-A1- 2016 355 208
- US-A1- 2017 057 433

## Description

### [Technical Field]

The present invention pertains to a steering apparatus mounted in an automobile and other equivalent vehicles.

### [Background Art]

In a steering apparatus in which a telescopic position of a steering wheel (a position of a steering wheel in a front and rear direction of a vehicle) is adjustable in accordance with a body build or posture upon driving of a driver, there is provided a stopper which regulates a telescopically adjustable range of an inner column relative to an outer column and which prevents a relative rotation between the outer column and the inner column. A steering apparatus in which such a stopper is so fitted onto the inner column by pressing a projection on the stopper formed by burr machining into a press-fit hole formed through the outer periphery of the inner column and then fastening the stopper and the inner column by a blind rivet, has been proposed. For example, reference is made Patent Document 1.

EP 2 450 254 A1, on which the preamble of claim 1 is based, describes a steering device capable of facilitating an assembly operation, decreasing the number of parts, and decreasing manufacturing costs.

JP 2016 060297 A describes a steering device which enables a new electrification passage from a steering wheel to a vehicle body to be secured.

US 2016/355208 A1 describes a steering device including an inner column, an outer column, an outer column bracket, an inner column bracket, a shear pin, and a damper.

US 2017/057433 A1 describes a steering apparatus having a guide member received in a guide groove and attached to an inner column, metal fittings that have conductivity, and an electricity-carrying plate.

### [Prior Art Document]

### [Patent Document]

Patent Document 1: Japan patent No. 5428582

### [Summary of the Invention]

### [Problems to be Solved by the Invention]

However, the steering apparatus as described above, has a problem that when the stopper is fitted to the inner column, it is difficult for the projection of the stopper to be pressed into the press-fit hole of the inner column, and therefore fitting work is not easy.

It is an object of the present invention, which was devised in view of the problems given above, to provide a steering apparatus configured for the stopper to be easily fitted to the inner column.

### [Means for Solving the Problem]

For solving the problem described above, the present invention provides a steering apparatus including:
an outer column provided with a guide groove portion extending in a front and rear direction of the vehicle,
an inner column provided with a stopper guided by the guide groove portion, and being fitted in the outer column to be movable in the front and rear direction of the vehicle, and
a steering shaft supported rotatably in the outer column and the inner column and being to be fitted with a steering wheel, and
the stopper being brought into contact with an end, at an rear side of the vehicle, of the groove portion to thereby regulate an adjustable range of the telescopic position of the steering wheel, being characterized in that
said stopper includes a stopper body made of a metal or a resin and a fastening and connecting means for fixing the stopper body to the inner column, and
the stopper body and the inner column are formed with through-holes communicated with each other and through which the fastening and connecting means is inserted.

### Effect of The Invention

According to the present invention, it is possible to provide a steering apparatus in which a stopper can be easily fitted to an inner column.

### [Brief Description of the Drawings]

[Fig. 1] Fig. 1 is a perspective view of a steering mechanism using a steering apparatus according to a first or a second embodiment of the present application, as viewed obliquely from a left front side.
[Fig. 2] Fig. 2 is a longitudinal cross sectional view of the steering apparatus according to the first embodiment of the present application.
[Fig. 3] Fig. 3 is a sectional view taken along the line 1A-1A shown in Fig. 2 of the steering apparatus according to the first embodiment of the present application.
[Fig. 4] Fig. 4 is a view showing procedure for fitting a movable side stopper to the inner column in the steering apparatus according to the first embodiment of the present application.
[Fig. 5] Fig. 5 is a view illustrating a stopper body of the movable side stopper in the steering apparatus according to the first embodiment of the present application.
[Fig. 6] Fig. 6 is a view illustrating a modified stopper body of the movable side stopper in the steering apparatus according to the first embodiment of the present application.
[Fig. 7] Fig. 7 is a longitudinal cross sectional view of the steering apparatus according to the second embodiment of the present application.
[Fig. 8] Fig. 8 is a sectional view taken along the line 2A-2A shown in Fig. 7 of the steering apparatus according to the second embodiment of the present application.
[Fig. 9] Fig. 9 is a view showing procedure for fitting a movable side stopper to an inner column in the steering apparatus according to the second embodiment of the present application.
[Fig. 10] Fig. 10 is a sectional view taken along the line 3A-3A shown in Fig. 9, with respect to an assembly comprising a stopper body, an electric conductive member and a cover member composing the movable side stopper in the steering apparatus according to the second embodiment of the present application.

### [Mode for Carrying out the Invention]

The present invention is defined by the independent claim 1. Preferred embodiments are defined in the dependent claims. In-depth descriptions of embodiments will hereinafter be made with reference to the drawings, the configuration being such that the present invention is applied to a steering apparatus used for a column assist type electric power steering mechanism of a tilt/telescopic adjustment type. In a terminology of the discussion to be made hereafter, the column assist type electric power steering mechanism is simply termed a "steering mechanism" hereinafter. Note that entering upon descriptions of the steering mechanism and the steering apparatus, a front-and-rear direction, a right-and-left direction and an up-and-down direction are indicated by arrow lines throughout the drawings, and positions and directions of respective members are explained along with these directional arrow lines. These directions are coincident with directions of a vehicle with the steering apparatus being mounted on the vehicle.

### <First Embodiment>

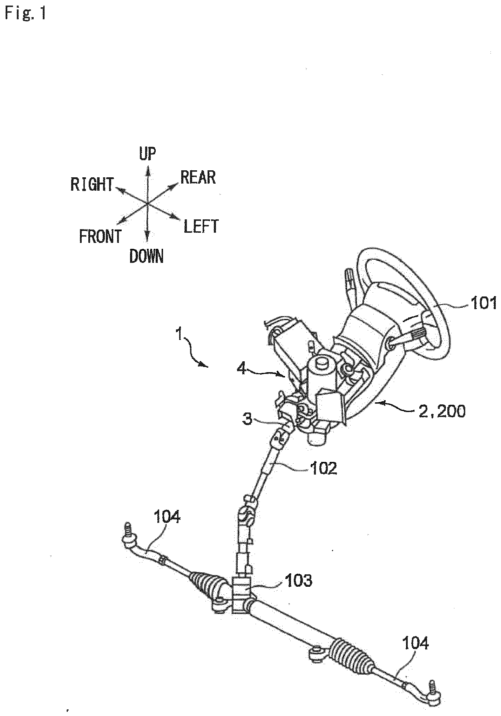

Fig. 1 is a perspective view of a steering mechanism 1 using a steering apparatus 2 according to a first embodiment of the present application, as viewed obliquely from a left front side. The first embodiment is disclosed only for sake of example, but it does not embody the present invention as defined by independent claim 1. As illustrated in Fig. 1, in the steering apparatus 2 according to the first embodiment, a steering force from a steering wheel 101 is transmitted to a steering gear 103 via a steering shaft 3 rotatably supported to a steering column and via an intermediate shaft 102, and steers front wheels via right and left tie rods 104 connected to an unillustrated rack shaft by reciprocating the rack shaft in the right-and-left direction. This is similar in a case where the steering mechanism 1 adopts a steering apparatus 200 relating to the second embodiment described later.

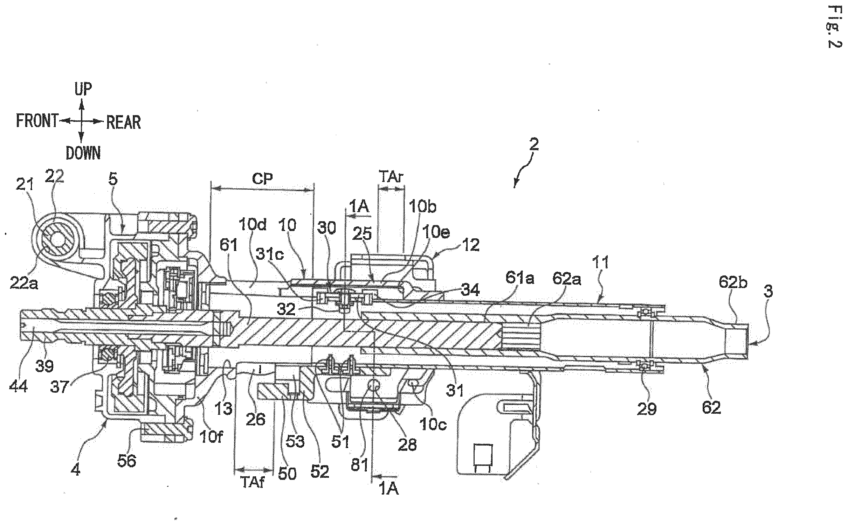

Fig. 2 is a longitudinal sectional view of the steering apparatus 2 according to the first embodiment of the present application. As depicted in Fig. 2, the steering apparatus 2 includes a cylindrical outer column 10 manufactured as an aluminum alloy die-cast molded product and building up an intermediate portion of the steering column, a tilt bracket 12 that is attached to an unillustrated vehicle body and holds a portion, at a rear side of the vehicle, of the outer column 10, an inner column 11 fitted in a portion, at the rear side of the vehicle, of the outer column 10, an electric power assist mechanism 4 attached to a portion, at a front side of vehicle, of the outer column 10 and a steering shaft 3. The steering shaft 3 is rotatably supported by the inner column 11, the outer column 10 and the electric power assist mechanism 4, and an end, at the rear side of the vehicle, of the steering shaft 3 is to be attached with a steering wheel 101 (not shown in Fig.2).

The steering column is composed of the outer column 10 and the inner column 11 telescopically adjustably each other in the axial direction. The outer column 10 is formed with a cylindrical holding hole 13 which is extended in the axial direction and whose inner diameter is slightly larger than an outside diameter of the inner column 11. In the cylindrical holding hole 13, a front side portion of the inner column 11 is fitted and held.

A resin coating having low friction coefficient is provided on an outer peripheral surface of a portion of the cylindrical holding hole 13 in which portion the inner column 11 is fitted and held, thereby the inner column 11 being moved frontward against a relatively small fastening friction force upon a secondary collision. A ball bearing 29 is fitted in an inner side of a rear end of the inner column 11. The ball bearing 29 supports rotatably an upper steering shaft 62 that composes a rear side portion of the steering shaft 3.

A front side upper portion of a housing 5 of the electric power assist mechanism 4 is formed with a pivot boss 22 through which a hole 22a is formed in a right-and-left direction of the vehicle to hold a collar 21 made of the steel pipe. A front end 10f radially outwardly expanded of the outer column 10 is fixed to the housing 5 by bolts 56. The electric power assist mechanism 4, the outer column 10, the inner column 11 and the steering shaft 3 are rotatably attached to the vehicle body through an unillustrated pivot bolt inserted through the pivot boss 22.

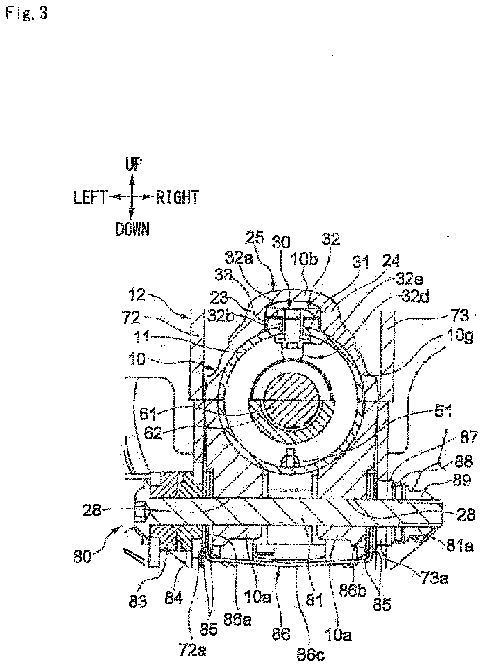

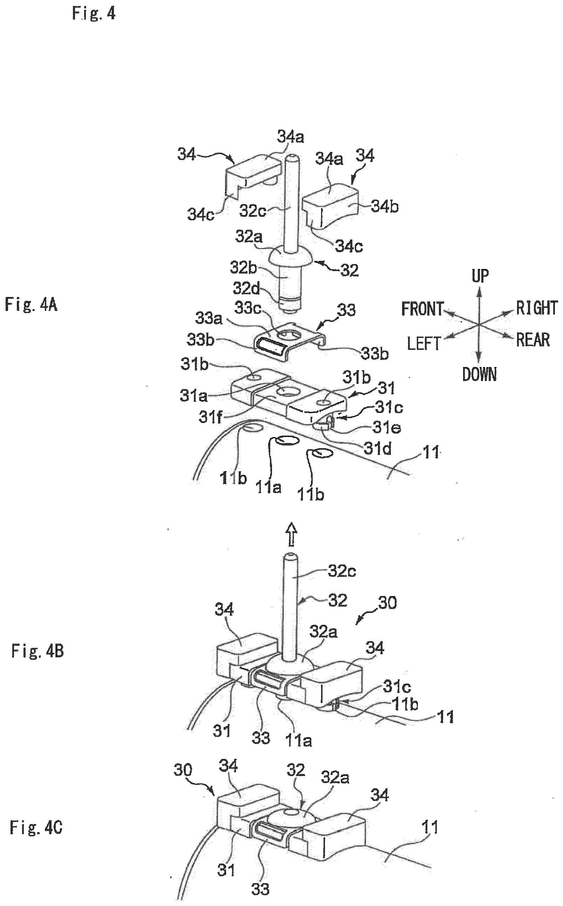

Fig. 3 is a sectional view taken along the line 1A-1A shown in Fig. 2 of the steering apparatus 2 according to the first embodiment of the present application. As illustrated in Fig. 2 and Fig. 4, an upper portion of the outer column 10 is formed with a guide groove portion 25 having a pair of right and left walls 23 and 24 upwardly projected and elongated in the front-and-rear direction of the vehicle. The guide groove portion 25 at an upper side (a radially outer side) of a rear side portion thereof is covered by a reinforcing portion 10b that enhances the rigidity of the outer column 10. As shown in Fig. 2, an upper portion (a radially outer side portion) of the outer column 4 at a front side portion thereof is formed with an opening portion 10d radially penetrated. A lower portion of the outer column 10 is formed through with a slit portion 26 that is, as shown in Fig.2, radially penetrated, elongated in the front-and-rear direction of the vehicle (in the axial direction ) and opens at the rear side.

A lower portion, at the rear side of the vehicle, of the outer column 10 is formed with a pair of clamp portions 10a and 10a projected downwardly, as shown in Fig. 3. The clamp portions 10a and 10a are formed with through-holes 28 penetrating in the right-and-left direction of the vehicle (in the width direction of the vehicle).

Through the through-holes 28 a fastening bolt 81 is inserted for a fastening mechanism 80 for tilt/telescopic adjustment described later. A fastening portion 10g of the outer column 10 that fastens the inner column 11 by the fastening mechanism 80 is extended more rearward of the vehicle than the clamp portion 10a. A lower end of the fastening portion 10g extended to the rear side of the vehicle is formed integrally with a deformation restraining portion 10c that is generally U-shaped, viewed in the axial direction (refer to Fig.2). The deformation restraining portion 10c enhances rigidity of the portion, at the rear side of the vehicle, of the fastening portion 10g, thereby preventing the portion, at the rear side of the vehicle, of the fastening portion 10g from excessively deforming in comparison with the portion at the front side of the vehicle, when the fastening portion 10g is fastened by the fastening mechanism 80.

As shown in Fig. 2, on an upper portion of the inner column 11 on the front side of the vehicle, a movable side stopper 30 described in detail later is attached, with being received in the guide groove portion 25 of the outer column 10. Relative rotation between the outer column 10 and the inner column 11 is prevented by the engagement of the inner side surfaces of the guide groove portion 25 and the movable stopper 30.

At a portion, at the rear side of the vehicle, of the guide groove portion 25, the outer column 10 is formed integrally with a fixed side stopper 10e. The fixed side stopper 10e with which the movable side stopper 30 is brought into contact when telescopic adjustment is conducted, restricts a telescopic adjustment range at the rear side of the vehicle (shown in "TAr" in Fig. 2) . Meanwhile, the fixed side stopper 10e is not limited to the one integrally formed with the outer column 10, but may be a separate member attached to the outer column 10. In such a latter case, the inner column 11 to which previously attached with the movable side stopper 30 is inserted into the outer column 10, and thereafter the fixed side stopper 10e may be attached to the outer column 10, so it becoming unnecessary for the outer column 10 to be formed with an opening 10d described later.

Fig. 4A is an exploded perspective view showing a configuration of the movable side stopper 30 in the steering apparatus 2 according to the first embodiment of the present application. As shown in Fig. 4A, the movable side stopper 30 is composed of a stopper body 31, a blind rivet 32 as a fastening means, an electric conductive member 33 and cover members 34.

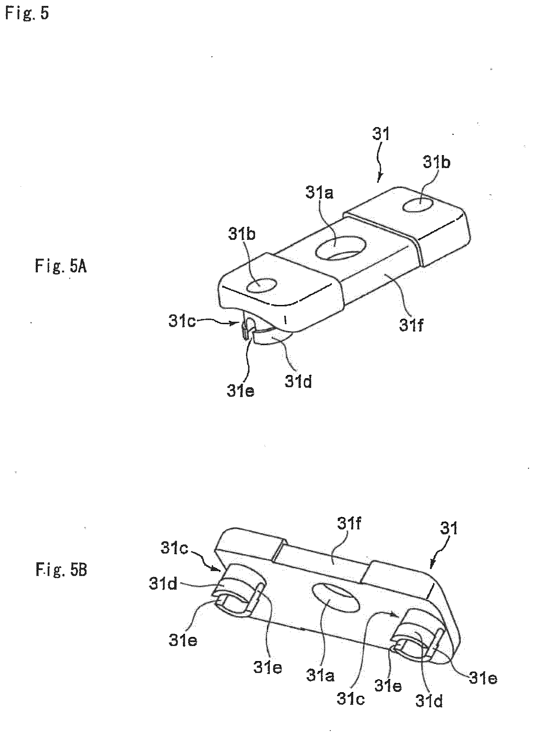

Fig. 5 is a view showing the stopper body 31 in the steering apparatus 2 according to the first embodiment of the present application. As shown in Fig. 4A and Fig.5, the stopper body 31 is made of a resin that is harder than the cover member 34, and is a rectangular thick plate extended in the front-and-rear direction of the vehicle. The stopper body 31 is formed at a central portion thereof with a circular through-hole 31a penetrating in the up-and-down direction of the vehicle. The diameter of the through-hole 31a is so designed to be slightly larger than the diameter of the rivet body 32b, described later, of the blind rivet 32. The stopper body 31 is formed at both the ends in the longitudinal direction with circular through-holes 31b and 31b penetrating through in the up-and-down direction of the vehicle. The through-holes 31b, 31a and 31b are located along a line with equi-distant from each other in the longitudinal direction.

As shown in Fig. 5B, a lower surface of the stopper body 31, that is, a surface, at the side of the inner column 11, of the stopper body 31, is formed integrally with the cylindrical projected portions 31c and 31c. The cylindrical projected portions 31c and 31c have respectively inner peripheral surfaces which are concentric with and same in diameter as the through-holes 31b and 31b to be communicated with the through-holes 31b and 31b. The cylindrical projected portions 31c are extended in parallel with the center axis of the through-hole 31a and the end of the cylindrical projected portion 31c is formed with a stepped portion whose outer diameter is made larger to provide a cylindrical removal preventing portion 31d. The cylindrical projected portion 31c is formed with two opposed U-shaped slits 31e and 31e cut from the end side.

Incidentally, four slits 31e, 31e, 31e and 31e of respective projected portions 31c and 31c are located along a line passing the centers of the projected portions 31c and 31c in the longitudinal direction of the stopper body 31. For such arrangement of the slits 31e, 31e, 31e and 31e, a force which the movable side stopper 30 receives by contacting with the fixed side stopper 10e and the guide groove portion 25 (a load in the front-and-rear direction of the vehicle, and a load in the rotational direction of the steering shaft 3) is taken into consideration, but the arrangement is not limited thereto. The number or shape of the slit 31e is not limited to the ones described above, either. Meanwhile, the length of the stopper body 31 from the lower surface thereof to the removing-out-preventing portion 31d, that is, the length of the stopper body 31 except the removing-out-preventing portion 31d is so designed to be the same as the thickness of the inner column 11.

As shown in Figs. 4A and 5A, the stopper body 31 is formed at the central portion in the longitudinal direction thereof with a stepped portion 31f for fitting the electric conductive member 33.

As shown in Fig. 5B, the lower surface of the stopper body 31 is formed as an arc-shaped curved surface with which the outer peripheral surface of the inner column 11 face to face contacts. Meanwhile, in the present invention, the lower surface of the stopper body 31 may be so shaped to meet with the shape of the inner column 11. For example, in a case where the stopper body 31 is attached to flat portions as in a case where the stopper 31 is attached to an inner column 11 having polygonal cross section, the lower surface of the stopper body 31 can be made plane.

The blind rivet 32 is one which is known and includes a cylindrical rivet body 32b formed integrally at an upper end with a disc shaped flange 32a having a large diameter, as shown in Fig. 4A, and a rivet core 32c inserted in the rivet body 32b.

The electric conductive member 33, as shown in Fig.4A, includes a flat portion 33a extended in the left-and-right direction of the vehicle and bent portions 33b and 33b extended downwardly from both the left and right ends of the flat portion 33a, these portions being integrally made of a metal thin plate having electric conductivity. In other words, the electric conductive member 33 is an inverted U-shape and fitted on a stepped portion 31f of the stopper body 31. The flat portion 33a of the conductive member 33 is formed at a central portion thereof with a circular through-hole 33c which is concentric to and same in diameter as the through-hole 31a so as to oppose to the through-hole 31a of the stopper body 31.

The cover members 34 and 34 include, as shown in Fig. 4A, upper portions 34a extended in the left-and-right direction of the vehicle, thick portions 34b extended downward from respective ends, in the front and rear direction of the vehicle, of the upper portions 34a, and thin portion 34c and 34c extended downward from both the left and right ends of the upper portions 34a, and they are made of a resin integrally.

A lower surface of the upper portion 34a of the cover member 34, 34, that is, a surface at the stopper body 31 side, is formed integrally with an unillustrated cylindrical projection to be fitted in the through-hole 31b of the stopper body 31. The cover members 34, 34 are attached to the stopper body 31 by fitting the cylindrical projections into the through-holes 31b of the stopper body 31, thereby both the ends, in the front-and-rear direction of the vehicle, of the stopper body 31 being covered and protected.

A lower surface of the thick portion 34b of the cover member 34, 34, that is, a surface at the inner column 11 side, is formed to be arc-shaped curved so as to be in face-to-face contact with the outer peripheral surface of the inner column 11.

Meanwhile, in the present embodiment, the front side cover member 34 of the two cover members 34 and 34 may be omitted.

As shown in Fig. 4A, the outer peripheral surface of the inner column 11 onto which the movable side stopper 30 is attached, is formed with a circular through-hole 11a that is concentric to and same in diameter as the through-hole 31a of the stopper body 31 and is opposed thereto, and also is formed with circular press-fit holes 11b and 11b that are concentric to the through-holes 31b and 31b of the stopper body 31 to oppose to the through-holes 31b and 31b. Diameter of the press-fit holes 11b, 11b is slightly smaller than diameter of the projection 31c, 31c so that the projection 31c, 31c of the stopper body 31 may be press-fitted into the press-fit holes 11b, 11b with a determined negative clearance.

Fitting of the movable side stopper 30 as configured above to the inner column 11 is conducted in the following procedures. Fig.4B and Fig. 4C are views showing procedures for fitting the movable side stopper 30 onto the inner column 11 in the steering apparatus according to the first embodiment of the present application.

Incidentally, the inner column 11 fitted into the outer column 12 shown in Fig.2 has been previously moved to a front side of the vehicle so that the through-hole 11a and the press-fit holes 11b, 11b of the inner column 11 may be exposed through the opening 10d of the outer column 10.

Procedure 1: The cover members 34 and 34 are attached to the front-and-rear ends of the stopper body 31, followed by fitting the electric conductive body 33 into the stepped portion 31f of the stopper body 31, and then inserting the blind rivet 32 into the through-hole 33c of the electric conductive member 33 and the through-hole 31a of the stopper body 31 (Refer to Fig. 4A and Fig. 4B).

Procedure 2: The stopper body 31 is inserted into the outer column 10 from through the opening 10d of the outer column 10(Refer to Fig.2) and is disposed on the inner column 11 as shown in Fig. 4B. At this time, positioning is so made that the blind rivet 32 and the through-hole 11a of the inner column 11 and the projection 31c, 31c of the stopper body 31 and the hole 11b, 11b of the inner column 11 are, respectively, opposed.

Procedure 3: The core 32c of the blind rivet 32 is removed upwardly out of the rivet body 32b with using an unillustrated tool, thereby the stopper body 31 and the inner column 11 being fastened by blind rivet 32. In detail, the end 32d of the rivet core 32c is pulled upward by the rivet tool and the lower portion of the rivet body 32b is enlarged in diameter, as shown in Fig.3, to form an enlarged diameter portion 32e. In associated therewith, the rivet body 32b is shrunk in the axial direction (in the up-and-down direction of the vehicle), and the rivet core 32c is broken at an upper portion of the end 32b and pulled out upwardly.
Thus, the flange 32a and the diameter enlarged portion 32e of the rivet body 32b fasten the stopper body 31 and the inner column 11. At this time, the rivet body 32b is inflated and enlarge in outer diameter, so clearance between each through-hole of the through-hole 11a of the inner column 11, the through-hole 31a of the stopper body 31 and the through-hole 33c of the conductive member 33, and the rivet body 32b, is eliminated.

Further, when the rivet core 32c of the blind rivet 32 is removed or pulled out by the rivet tool, the stopper body 31 is pressed against the inner column 11 by the force for pulling out the rivet core 32c, and the projected portions 31c, 31c of the stopper body 31 are press-fitted into the press-fit holes 11b, 11b of the inner column 11 and the removal pulling-out-preventing portions 31d, 31d of the projected portions 31c or 31c, are advanced into the inner column 11 and brought into engagement with the inner periphery of the inner column 11(refer to Fig.2). Meanwhile, at this time, the projected portions 31c are easily elastically deformable due to slits 31e, 31e, so load required for press-fitting the projected portions 31c into the press-fit holes 11b being made small, thus press-fitting of the projected portions 31c into the press-fit holes 11b being made easily and smoothly.

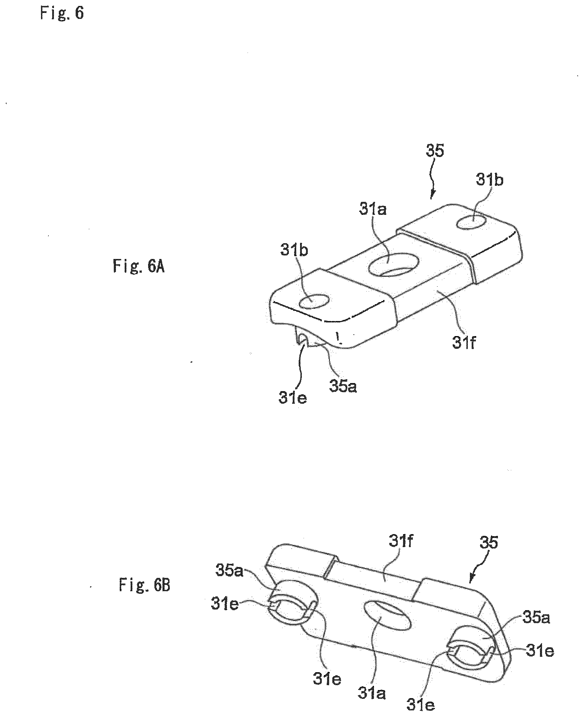

As described above, fitting of the movable side stopper 30 to the inner column 11 is completed, as shown in Fig. 4C. According to the above described procedures, fastening and connecting of the blind rivet 32 to the stopper body 31 and press-fitting of the projected portions 31c, 31c of the stopper body 31 into the press-fit holes 11b, 11b of the inner column 11 are performed at the same time, so fitting work of the movable side stopper 30 onto the inner column 11 can be made with less steps easily and speedy. Further, fitting work can be made from the outer periphery side, so it is easy. In other words, no assembling work from the inner periphery side of the inner column 11 is required, so the fitting work may be made easily. Moreover, each of constituent members of the movable side stopper 30 is simple in shape, so assembling work described in the above procedure 1 is easy. Further, as shown in Fig.4 and Fig.5, the movable side stopper 30 (in particular, the stopper body 31 and the stopper body 35 shown in Fig. 6 described later) is symmetrical with respect to the center axis of the through-hole 31a, so error in the fitting in the front-and-rear direction of the vehicle can be prevented.

As described above, the movable side stopper 30 is fixed to the inner column 11 by the blind rivet 32 and two projected portions 31c and 31c. For this configuration, the state of the movable side stopper 30 fixed to the inner column 11 may be maintained, even if the movable side stopper 30 is brought into contact with the fixed side stopper 10e of the outer column 10 when the driver operates the steering wheel to adjust the telescopic position so that any force (or load) in the front-and-rear direction of the vehicle is applied to the fixed side stopper 10e, or even if the movable side stopper 30 is brought into contact with the inner side surface of the guide groove portion 25 in the fixed side stopper 10e of the outer column 10 so that any rotational force is applied to the movable side stopper 30, when the driver steers the steering wheel in the key locked state. Accordingly, it is possible to conduct stably restriction of the range of the telescopic adjustment of the inner column 11 relative to the outer column 10 and prevention of rotation of the inner column 11 relative to the outer column 10. In particular, the present embodiment takes a configuration that the removal preventing portions 31d and 31d of the projected portions 31c and 31c in the stopper body 31 of the movable side stopper 30 are engaged with the inner periphery of the inner column 11. Accordingly, removal of the projected portions 31c and 31c out from the press-fit holes 11b and 11b of the inner column 11 can be effectively prevented, so that the state where the movable side stopper 30 is fixed to the inner column 11 can be maintained more stably.

In the case of the conventional steering apparatus described previously, in order to maintain the state where the stopper is fixed to the inner column against any force generated in the front-and-rear direction of the vehicle at the time when the driver adjusts the telescopic position of the steering wheel, or against a rotational force generated at the time when the driver steers the steering wheel in the key-locked state, it is necessary to make interference of fitting of the projected portion of the stopper into the press-fit holes of the inner column larger so that the projected portion is hardly removed out of the press-fit holes. In such a case, however, press-fitting force necessarily becomes large, and the inner column which receives the press-fitting force would be deformed. In order to prevent such deformation of the inner column, it became necessary to make the thickness of the inner column larger, or to reinforce the inner periphery of the inner column by any separate member.

On the contrary, in the present embodiment, the projected portions 31c and 31c of the stopper body 31 are easily deformable due to slits 31e and 31e, so it is possible to suppress press-fit force smaller. Therefore, it is possible to prevent deformation of the inner column 11 with no reinforcing member being provided. Further, the removal preventing portions 31d and 31d of the projected portions 31c and 31c can prevent the projected portions 31c and 31c from removing or falling out of the press-fit holes 11b and 11b. Accordingly, it is not necessary to make interference of fitting of the projected portions 31c and 31c into the press-fit holes 11b and 11b larger, so a force for press-fitting can be suppressed smaller.

Here, it is noted that the steering wheel 101 of a car is attached with electric equipment such as a horn or an air bag, and for most of those electric equipments a body earth is performed. Therefore, it is necessary to secure an electrifying or electrically conductive path from the steering wheel 101 to the vehicle body. However, if coating of low frictional material is applied onto the inner periphery of the outer column 10 or onto the outer periphery of the inner column 11, as described above, it becomes difficult to conduct electricity through the electrifying path by the surface-to-surface contact of the inner column 11 and the outer column 10 due to the existence of the coating. Further, if a resin coating is applied to the spline fitted portion of the steering shaft 3, the resin coating makes difficult electric conduction by the electrifying path through the spline fitted portion.

In the present embodiment, a folded or bent portion 33b of the electric conductive member 33 is disposed on the stepped portion 31f of the stopper body 31, as shown in Fig. 3 and Fig. 4C, thereby the inner side surface of the guide groove portion 25 of the outer column 10 is brought into contact with the folded or bent portion 33b of the electric conductive member 33 with no plastic deformation of the folded and bent portion 33b, accordingly elastic contact between the inner side surface of the guide groove 25 and the folded or bent portion 33b of the electric conductive member 33 can be secured. Thus, the inner side surface of the guide groove portion 25 of the outer column 10 and the folded or bent portion 33b of the electric conductive member 33, the flange 32a of the blind rivet 32 and the flat portion 33a of the conductive member 33, the diameter enlarged portion 32e at the lower end of the rivet body 32b of the blind rivet 32 and the inner periphery of the inner column 11 or/and the surface forming the through-hole 11a of the inner column 11 are respectively in contact with each other. With this configuration, the inner column 11 and the outer column 10 are electrically connected, and an electrifying path from the steering wheel 101 to the car body can be secured.

As shown in Fig.3, the tilt bracket 12 comprises an unillustrated upper plate elongated in the left-and-right direction and a pair of left and right side plates 72 and 73 welded to the lower surface of the upper plate. The upper plate is fastened and connected to the body of the vehicle through bolts and the like. An interval between the side plates 72 and 73 is so set to be slightly larger than the width in the left-and-right direction of the outer column 10 in the free state. The side plates 72 and 73 are respectively formed with the elongated holes 72a and 73a for tilt adjustment. The elongated holes 72a and 72b are arc-shaped about the pivot boss 22 as the center.

As shown in Fig.3, the lower portion of the tilt bracket 12 is provided with a fastening mechanism 80 which serves for conducting tilt adjustment as well as telescopic adjustment of the steering column. The fastening mechanism 80 performs fastening or releasing the bolt 81 inserted from through the left side of the vehicle through the fastening hole 28 formed through the clamp portions 10a, 10a of the outer column 10, in accordance with the user's operation, whereby fixing or releasing of the tilt/telescopic adjusted position is conducted.

As shown in Fig.3, an unillustrated operation lever to be rotationally operated by the driver, a movable cam 83 rotated as one body with the operation lever and a fixed cam 84 whose right end is engaged non-rotatably with the tilt adjustment elongated hole 72a are fitted on the fastening bolt 81 and between a head portion thereof and the side plate 72 of the tilt bracket 12. The fixed cam 84 and the movable cam 83 are formed at the respective opposed ends with inclined cam surfaces complimentarily shaped. In accordance with the rotation of the operational lever, the fixed cam 84 and the movable cam 83 are brought into engagement and approach to each other to release the fastening by the fastening bolt 81, and are moved apart from each other so that a tensioning force is generated by the bolt 81 to conduct the fastening.

Two friction plates 85 at each of left and right sides which engage a latch arm extended, in the left-and-right direction of the vehicle, from a lower stopper 52 (refer to Fig. 2) described later, and an intermediate friction plate 86 whose paired left and right end plate portions 86a and 86b respectively pinched by each two of left and right friction plates 85, are fitted on the fastening bolt 81 and between the side plate 72, 73 of the tilt bracket 12 and the outer column 10. The friction plates 85 are in engagement with the lower stopper 50 as described above. By increasing the number of the friction surfaces, holding of the inner column 11 by the outer column 10 is reinforced.

The friction plates 85 are formed with elongated holes extended in the front-and-rear direction of the vehicle so as to allow relative movement thereof to the fastening bolt 81 so that telescopic adjustment may become possible. The intermediate friction plate 86 is so configured that a pair of left and right end plate portions 86a and 86b which respectively are formed through at the centers thereof with round holes through which the fastening bolt 81 is passed and are in face-to-face contact with the friction plates 85, are connected by a connecting plate portion 86c.

As shown in Fig.3, at the outside of the side plate 73, the pressing plate 87 and the thrust bearing 88 are fitted on the fastening bolt 81, and those members are fastened together with other members by the nut 89 screwed onto a male screw 81a of the fastening bolt 81.

As shown in Fig. 2, at a lower surface of a front end portion of the inner column 11, a lower stopper 50 manufactured as an aluminum alloy die-cast molded product is provided to be loosely fitted in a slit portion 26. At a front end portion of the lower stopper 50, a buffer holding portion 52 whose cross section cut along axial direction and up-and-down direction, is substantially L-shaped, is formed to project downward, and a buffer block 53 made of rubber is held in the buffer holding portion 52. The buffer block 53 is brought in contact with a front end portion of the slit portion 26 and regulates a range ("TAf" in Fig.2) for telescopic adjustment in the forward direction of the vehicle.

The lower stopper 50 is fixed to the inner column 11 by a pair of resin pins 51 and 51 lined in the front-and-direction of the vehicle. When a load of the secondary collision is applied to the steering wheel 101, the load is transmitted through the upper steering shaft 62 to the inner column 11 so that the inner column 11 is moved forward. On the other hand, the buffer holding portion 52 supported by the friction plates 85 is not moved. Accordingly, shear force is applied to the resin pins 51,51, which in turn are broaken. Since the resin pins 51, 51 are broaken or cut off, the connection between the inner column 11 and the buffer holding portion 52 is released, so the inner column 11 is subjected to friction force only caused between the inner column 11 and the outer column 10 and the axial movement of the inner column is restricted. For such a structure, even if load by the secondary collision is relatively small, the inner column 11 is allowed to move forward, and the inner column 11 is moved in the range shown by a symbol "CP" to loosen the impact of the secondary collision.

As shown in Fig.2, the steering shaft 3 is composed of the lower steering shaft 61 and the upper steering shaft 62 spline-connected to each other in the steering columns so that telescopic adjustment may be made, and an output shaft 39 connected to the lower steering shaft 61 through the torsion bar 44. The steering shaft 3 is rotatably supported by the ball bearing 29 described above and fitted in the rear portion of the inner column 11 and by the ball bearing37 fitted in the housing 5 of the electric power assist mechanism 4.

The lower steering shaft 61 can be formed by rolling and broaching with a steel round bar used as a material, and includes a male spline 61a formed along an outer periphery of a rear half portion thereof with respect to the front-and-rear direction of the vehicle. On the other hand, the upper steering shaft 62 can be formed by drawing and broaching with a steel pipe as a material, and includes a female spline 62a formed along an inner periphery of a front half portion thereof with respect to the front-and-rear direction of the vehicle and fitted on the male spline 61a of the front steering shaft 61. A resin coating is provided on the male spline 61a of the lower steering shaft 61 to prevent a backlash between it and the female spline 62a of the upper steering shaft 62. Meanwhile, coating of low friction material may be used instead of the resin coating.

A serration 62b, on which a boss of the steering wheel 101 (not shown in Fig. 2) is fitted, is formed at a rear end of the upper steering shaft 62.

When the driver rotates the unillustrated operation lever on the fastening side, a ridge of the inclined cam surface of the movable cam 83 runs up onto a ridge of the inclined cam surface of the fixed cam 84 shown in Fig.3, thereby pulling the fastening bolt 81 leftward on one hand and pressing the fixed cam 84 rightward on the other hand. This action causes the left and right side plates 72, 73 to fasten the fastening portions 10a, 10a of the outer column 10 from the left and right sides to thereby restrict the steering column from moving in a tilt direction, and simultaneously the inner column 11 is restricted from moving in the axial direction by a fastening friction force generated for the outer column 10 to fasten the inner column 11 and by a friction force generated on the friction plate 85.

Whereas when the drivers rotates the operation lever in the releasing direction, each of the left and right side plates 72, 73, of which an interval in the free state is larger than the width of the outer column 10 as described above, resiliently returns. This action cancels both of the restriction on the tilt-directional movement of the outer column 10 and the restriction on the axis-directional movement of the inner column 11, thereby enabling the driver to perform the adjustment of the position of the steering wheel 101.

In this state, the driver can move the steering wheel 101 in the rearward direction of the vehicle by an axial distance, as shown by the symbol "TAr" in Fig. 2, between the fixed side stopper 10e formed on the outer column 10 and the movable side stopper 30. When the movable side stopper 30 arrives at a predetermined position ( that is, a position where the movable side stopper is moved rearward by "TAr"), the movable side stopper 30 is brought into contact with the fixed side stopper 10e, and the movement of the steering wheel 101 is prevented.

As described above, according to the present embodiment, it is possible to realize a steering apparatus, in which fitting of the movable side stopper 30 onto the inner column 11, can be made speedy and easily with less number of machining or assembling steps, while preventing deformation of the inner column 11.

Incidentally, in the steering apparatus 2 according to the present embodiment, a stopper body 35 according to a modified example described below may replace for the stopper body 31 of the movable side stopper 30. Fig. 6 is a view showing a configuration of a modified example of the stopper body 31 in the movable side stopper 30 of the steering apparatus 2 according to the first embodiment of the present application. Meanwhile, with respect to the stopper body 35, the same reference symbols or numbers are used for similar configurations to the ones of the stopper body 31 and explanations are omitted.

The stopper body 35 relating to the modification shown in Fig. 6A and Fig. 6B, is made of a metal, and is formed with the through holes 31b, 31b and cylindrical projected portions 35a, 35a on the lower surface of the stopper body 35, by burr machining. Each of the projected portions 35a, 35a is formed with a couple of U-shaped slits 31e, 31e, and slits 31e, 31e, 31e and 31e, four in total are located along a line passing the centers of the projected portions 35a, 35a in the longitudinal direction of the stopper body 35. Meanwhile, the outer diameter of the projected portion 35a, 35a is designed to be larger than the press fit hole 11b, 11b, so that the projected portion 35a, 35a is press-fitted with a predetermined interference into the press fit hole 11b, 11b.

Procedures for fitting the movable side stopper 30 equipped with the stopper body 35 configured as above onto the inner column 11 are similar to procedures described herein before. In other words, it is possible to realize a steering apparatus, in which fitting of the movable side stopper 30 onto the inner column 11, can be made speedy and easily with less number of machining or assembling steps, while preventing deformation of the inner column 11. Meanwhile, with respect to the movable side stopper 30 to which the stopper body 35 is applied, the electric conductive member 33 may be omitted.

In the description of the above embodiment, concrete explanations were made in order to assist understanding of the present invention, but the invention is not limited to them and suitable alteration, improvements or the like are possible.

For example, the above embodiment is related to a socalled column assist type electric power assist steering apparatus to which the present invention is applied, but the present invention can be applied to other steering apparatus such as a rack assist type electric power assist steering apparatus.

Further, the concrete configuration as well as contour of the movable side stopper 30 may be changed properly without departing the spirit of the present invention.

For example, the stopper body 31 of the movable side stopper 30 that is made of a resin, may be made of a metal (such as, sintered metal). Further, the stopper body 35 made of a metal relating to the modified example, may be made of a resin.

The stopper body 31 of the movable side stopper 30 and the cover members 34, 34 are separate members made from resins which are different in hardness from each other, but they may be one integral member of a same resin.

The movable side stopper 30 is fixed to the inner column 11 by one blind rivet 32 and two projected portions 31c, 31c (35a, 35a). However, the movable side stopper 30 may be fixed to the inner column 11 by two or more blind rivets 32, or three or more projected portions 31c (35a).

The shape of the projected portions 31c of the stopper body 31 of the movable side stopper 30 is not limited to hollowed cylindrical shape, but may be round column shape or rectangular column shape. Further, the shape of the removal preventing portion 31d of the projected portions 31c is not limited to cylindrical shape. For example, if the outer periphery of the the removal preventing portion 31d is converged toward the tip end, the press fitting operation of the projected portions 31c into the press fit hole 11b of the inner column becomes easier.

### (Second Embodiment)

Fig. 1 is a perspective view illustrating of a steering apparatus 200 according to the second embodiment of the present application, viewed obliquely from a front side.
As illustrated in Fig. 1, in the steering apparatus 200 according to the present embodiment, a steering force from a steering wheel 101 is transmitted to a steering gear 103 via a steering shaft 3 rotatably supported to a steering column and via an intermediate shaft 102, and steers front wheels via right and left tie rods 104 connected to an unillustrated rack shaft by reciprocating the rack shaft in the right-and-left direction.

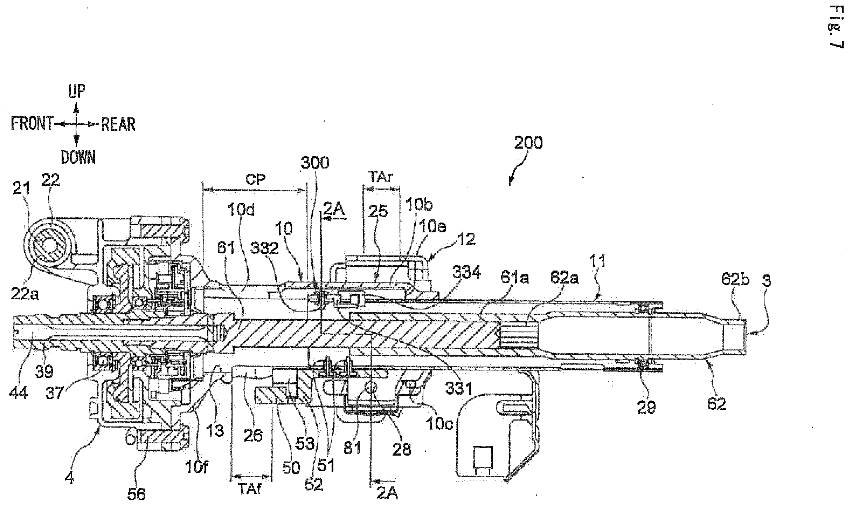

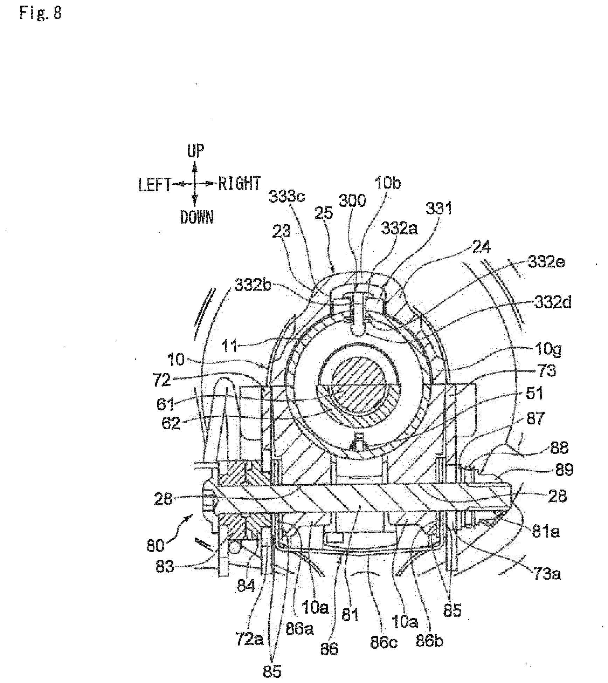

Fig. 7 is a longitudinal sectional view of the steering apparatus 200 according to the second embodiment of the present application. Meanwhile, with respect to the steering apparatus 200 according to the second embodiment of the present application shown in Fig.7 and Fig.8, the same references and symbols are used for the configuration similar to the first embodiment. As depicted in Fig. 7, the steering apparatus 200 according to the second embodiment of the present application is provided with a movable side stopper 300 instead of the movable side stopper 30 of the first embodiment. The steering apparatus 200, as shown in Fig.7, includes a cylindrical outer column 10 manufactured as an aluminum alloy die-cast molded product and building up an intermediate portion of the steering column, a tilt bracket 12 that is attached to an unillustrated vehicle body and holds a portion, at the rear side of the vehicle, of the outer column 10, an inner column 11 fitted in a portion, at the rear side of the vehicle, of the outer column 10, an electric power assist mechanism 4 attached to a front side portion of the outer column 10 and a steering shaft 3. Meanwhile, the steering shaft 3 is rotatably supported by the inner column 11, the outer column 10 and the electric power assist mechanism 4, and a rear side end of the steering shaft 3 is to be attached with a steering wheel 101 (not shown in Fig.7).

The steering column is composed of the outer column 10 and the inner column 11 telescopically adjustably each other in the axial direction. The outer column 10 is formed with a holding cylindrical perforation 13 which is extended in the axial direction and whose inner diameter is slightly larger than an outer diameter of the inner column 11. In the holding cylindrical perforation 13 a front side portion of the inner column 11 is fitted and held.

A resin coating having a low friction coefficient is provided on an outer peripheral surface of a portion of the inner column 11 which portion is to be fitted in and held by the holding cylindrical perforation 13. The inner column 11 is moved frontward of the vehicle against relatively small fastening friction force upon the secondary collision. A ball bearing 29 is fitted in an inner side of a rear end of the inner column 11. The ball bearing 29 supports rotatably an upper steering shaft 62 that composes a rear side portion of the steering shaft 3.

A front side upper portion of a housing of the electric power assist mechanism 4 is formed with a pivot boss 22 in which a hole 22a is formed through in a right-and-left direction of the vehicle to hold a collar 21 made of the steel pipe. A front end 10f radially outwardly expanded of the outer column 10 is fixed to the housing 5 by bolts 56. The electric power assist mechanism 4, the outer column 10, the inner column 11 and the steering shaft 3 are rotatably attached to the vehicle body by an unillustrated pivot bolt inserted through the pivot boss 22.

Fig. 8 is a sectional view taken along the line 2A-2A shown in Fig. 7 of the steering apparatus 200 according to the second embodiment of the present application. As illustrated in Fig. 7 and Fig. 8, an upper portion of the outer column 10 is formed with a guide groove portion 25 having a pair of right and left walls 23 and 24 upwardly projected and elongated in the front-and-rear direction of the vehicle. The guide groove portion 25 is covered by a reinforcing portion 10b that enhances the rigidity of the outer column 10, at an upper side (a radially outer side) of a rear side portion of the vehicle. As shown in Fig. 7, an upper portion (a radially outer side portion) of the outer column 10 at the front side of the vehicle is formed with an opening portion 10d radially penetrated. A lower portion of the outer column 10 is formed through with a slit portion 26 that is, as shown in Fig. 7, radially penetrated, elongated in the front-and-rear direction( in the axial direction ) and opens at the rear side.

A lower portion of the outer column 10 at the rear side of the vehicle, is formed with a pair of clamp portions 10a and 10a projected downwardly, as shown in Fig. 8. The clamp portions 10a and 10a are formed with through-holes 28 penetrating in the right-and-left direction (in the width direction) of the vehicle.

Through the through-holes 28 a fastening bolt 81 of a fastening mechanism 80 for tilt/telescopic adjustment described later, is inserted. A fastening portion 10g of the outer column 10 that fastens the inner column 11 by the fastening mechanism 80 is extended more rearward of the vehicle than the clamp portion 10a. A lower end of the fastening portion 10g extended to the rear side of the vehicle, is formed integrally with a deformation restraining portion 10c that is generally U-shaped, viewed in the axial direction (refer to Fig.7). The deformation restraining portion 10c enhances the rigidity of the rear portion of the fastening portion 10g, thereby preventing the rear portion of the fastening portion 10g from excessively deforming in comparison with the front portion thereof when the fastening portion 10g is fastened by the fastening mechanism 80.

As shown in Fig. 7, at an upper portion of the inner column 11 at the front side of the vehicle, a movable side stopper 30 described in detail later is received in the guide groove portion 25 of the outer column 10. Relative rotation between the outer column 10 and the inner column 11 about the center axis of the steering column is prevented by the engagement of the inner side surfaces of the guide groove portion 25 and the movable side stopper 300.

At a portion, at the rear side of the vehicle, of the guide groove portion 25, the outer column 10 is formed integrally with a fixed stopper 10e. The fixed stopper 10e with which the movable side stopper 300 is brought into contact when the telescopic adjustment is conducted, defines (restricts) a telescopic adjustment range (shown in "TAr" in Fig. 7) at the rear side of the vehicle. Meanwhile, the fixed side stopper 10e is not limited to the one integrally formed with the outer column 10, but may be a separate member attached to the outer column 10. In such a latter case, the inner column 11 to which previously the movable side stopper 300 attached, is inserted into the outer column 10, and thereafter the fixed side stopper 10e may be attached to the outer column 10, so it becoming unnecessary for the outer column 10 to be formed with an opening 10d described later.

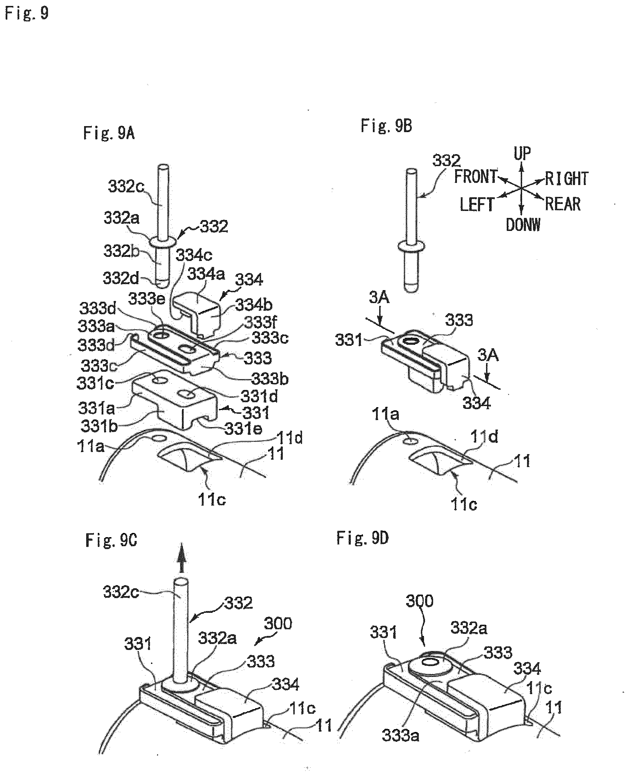

Fig. 9A is an exploded perspective view showing a configuration of the movable side stopper 300 in the steering apparatus 200 according to the second embodiment of the present application. As shown in Fig. 9A, the movable side stopper 300 is composed of a stopper body 331, a blind rivet 332 as a fastening and connecting means, an electric conductive member 333 and a cover member 334.

As shown in Fig. 9A, the stopper body 331 is made of a metal (concretely, machine structural carbon steel, instanced by Japanese Industrial Standard (JIS), S35C, S45C, S25C or the like), and is a rectangular plate member extended in the front-and-rear direction of the vehicle. The stopper body 331 includes a thin plate portion 331a at a front side of the vehicle and a thick plate portion 331b at a rear side of the vehicle and is L-shaped as viewed from a side. Meanwhile, the stopper body 331 may be made of a resin that is harder than the cover member 334, or a resin inserted therein with a core metal such as steel, or other metal such as aluminum.

The stopper body 331 is formed at the central portion of the thin plate portion 331a with a circular through-hole 331c penetrating in the up-and-down direction of the vehicle. The diameter of the through-hole 331c is so designed to be slightly larger than the diameter of the rivet body 332b described later of the blind rivet 332.

A lower surface of the thin plate portion 331a is formed as an arc-shaped curved surface to be in surface-to-surface contact with the outer peripheral surface of the inner column 11. Meanwhile, the lower surface of the thin plate portion 331a may be so formed to have a shape which meets with the shape of the inner column 11 in the same way as the lower surface of the stopper body 31 of the first embodiment described above.

The stopper body 331 is formed at the central portion of the thick plate portion 331b with a non-circular or oblong, that is, elliptical through-hole (slot) 331d, that is different in shape from the through-hole 331c of the thin plate portion 331a. Meanwhile, the through-hole 331d penetrates the thick plate portion 331b in the up-and-down direction of the vehicle, but it may be a recessed portion which does not penetrate.

At a center of a lower surface of the thick-plate portion 331b a groove portion 331e elongated in the front-and-rear direction of the vehicle, is formed. A width of the groove portion 331e is slightly larger than a width of a pawl portion 334d of the cover member 334 as described later in order to latch the pawl portion 334d. Meanwhile, the groove portion 331e may be replaced by a recessed portion formed at a lower surface of the rear end of the thick plate portion 331b, the recessed portion being able to latch the pawl portion 334d of the cover member 334.

The blind rivet 332 is the one which is known and includes a cylindrical rivet body 332b integrally formed at an upper end with a disc-shaped flange 332a having a large diameter and a rivet core 332c inserted in the rivet body 332b. Meanwhile, the tip end portion 332d of the rivet core 332c is spherically shaped, and is different in shape from the tip end 32d of the blind rivet 32 of the first embodiment.

The electric conductive member 333, as shown in Fig.9A, is so configured that a thin plate member having an electric conductivity and made of a metal, instanced by a stainless steel of Japanese Industrial Standard (JIS), SUS 304 or the like, is bent to cover or surround the upper surface and side surfaces of the stopper body 331. Concretely, the electric conductive member 333 includes a flat portion 333a extended in the front-and-rear direction of the vehicle, a bent portions 333b extended downwardly from the rear end of the flat portion 333a, arm portions 333c, 333c extended frontward from both the ends of the bent portion 333b at the left and right sides of the vehicle, and the pawl portions 333d, 333d extended in the left-and-side direction of the vehicle inwardly from the front end portion of the arms 333c, 333c.

The flat portion 333a of the electric conductive member 333 is formed with a through-hole 333e and a non-circular through-hole 333f which are side by side in the front-and-rear direction of the vehicle. The through-hole 333e is opposed to the through-hole 331c of the stopper body 331 and is a circular hole having a same axis and a same diameter as the through-hole 331c. The through-hole 333f is opposed to the through-hole 331d of the stopper body 331 and is an elongated or elliptical hole having same axes and a same size as the through-hole 331d.

The arm portions 333c, 333c of the electric conductive member 333 are extended frontward from both the ends, in the left-and right direction of the vehicle, of the bent portion 333b so that, in detail, they may subtend a larger angle than 90 degrees with respect to the bent portion 333b. With this configuration, the arm portions 333c, 333c are become more distant from each other or spread outwardly in the left-and-right direction of the vehicle, in accordance with the distance from both the ends, thereby functioning as springs which deflect in the left-and-side direction of the vehicle. Meanwhile, the arm portions 333c, 333c are extended from the rear ends of the sides of the stopper body 331, to the front ends, so the lengths of the arm portions 333c, 333c can be sufficiently secured, thereby spring force being able to be maintained small.

The cover member 334 includes, as shown in Fig. 9A, a horizontal portions 334a extended in the front-and-rear direction of the vehicle and a vertical portion 334b extended downward from the rear end of the horizontal portion 334a, and they are an integrally formed plate member made of a resin (concretely, POM (polyacetal resin).

The lower surface of the horizontal portion 334a of the cover member 334, that is, the surface at the stopper body 331 side is formed integrally with a column-shaped projection 334c having an elliptical section which to be fitted in the through-hole 333f of the electric conductive member 333 and the through-hole 331d of the stopper body 331.

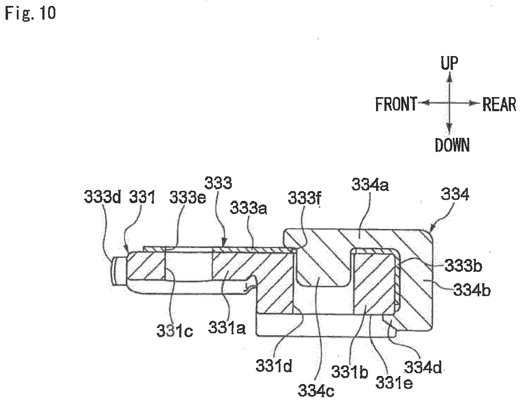

The lower end portion of the vertical portion 334b of the cover member 334 is formed integrally with a pawl portion 334d that is able to be latched in the groove portion 331e of the stopper body 331 (Refer to Fig. 10) . Meanwhile, the pawl portion 334d is triangular shaped extended in the left-and-side direction of the vehicle, as shown in Fig. 10, but the pawl portion 334d is not limited to this shape but may take any shape that can be latched in the groove portion 331e of the stopper body 331.

As shown in Fig. 9A, the outer peripheral surface of the inner column 11 onto which the movable side stopper 300 is attached, is formed with a circular through-hole 11a and a rectangular hole 11c side by side in the front-and-rear direction of the vehicle. The through-hole 11a is opposed to the through-hole 331c of the thin plate portion 331a of the stopper body 331 and is a circular hole which is coaxial with and a same diameter as the circular hole 331c. The rectangular hole 11c is a rectangular through-hole (fitting hole) in which the thick plate portion 331b of the stopper body 331 is fitted. In detail, the rectangular hole 11c is so designed to have a size that the thick plate portion 331b of the stopper body 331, when inserted therein together with the bent portions 333b of the conductive member 331 and the vertical portion 334b of the cover member 334, to be smoothly fitted.

Fitting of the movable side stopper 300 as configured above to the inner column 11 is conducted in the following procedures. Fig.9B to Fig. 9D are views showing procedures for fitting the movable side stopper 300 onto the inner column 11 in the steering apparatus according to the second embodiment of the present application.

Incidentally, the inner column 11 fitted into the outer column 12 shown in Fig. 7, has been moved previously to the front side of the vehicle so that the through-hole 11a and the rectangular hole 11c of the inner column 11 are exposed through the opening 10d of the outer column 10.

Procedure 1: The electric conductive member 333 is attached on the upper portion of the stopper body 331. Further, the column-shaped projection 334c of the cover member 334 is inserted into the through-hole 333f of the cover member 334 and the through-hole 331d of the stopper body 331, and simultaneously therewith the pawl portion 334d of the cover member 334 is elastically deformed to be latched in (snap-fitted in) the groove portion 331e of the stopper body 331, so that the cover member 334 is attached to the stopper body 331 (refer to Fig. 9A) . Thus, the cover member 334 is so configured to pinch the stopper body 331 and the electric conductive member 333, so the stopper body 331, the electric conductive member 333 and the cover member 334 can be treated as an assembly (a sub-assembly)(Refer to Fig.9B.).

Procedure 2: The stopper body 331 is inserted from into the opening portion 10d of the outer column 10 (Refer to Fig. 7), so that the thick plate portion 331b of the stopper body 331 and the vertical portion 334b of the cover member 334 are inserted and fitted in the rectangular hole 11c of the inner column 11, as shown in Fig. 9C. Thus, the through-hole 333e of the electric conductive member 333, the through-hole 331c of the stopper body 331 and the through-hole 11a of the inner column 11 are opposed to conduct positioning of them. Into the through-hole 333e, the through-hole 331c and the through-hole 11a thus positioning being made, the blind rivet 332 is inserted (Refer to Fig. 9C).

Procedure 3: In the same manner as described above with respect to the Procedure 3 of the first embodiment, the rivet core 332c of the blind rivet 332 is removed upwardly out of the rivet body 332b with using an unillustrated tool, thereby the stopper body 331 and the inner column 11 being fastened and connected by the blind rivet 332 (Refer to Fig. 9C). In detail, the rivet core 332c is pulled upward by the rivet tool, thereby the end 332d of the rivet core 332c enlarging the lower portion of the rivet body 332b in diameter, as shown in Fig.8, to form an enlarged diameter portion 332e. In associated therewith, the rivet body 332b is shrunk in the axial direction (in the up-and-down direction of the vehicle), and the rivet core 332c is broken at an upper portion of the end 332d and pulled out upwardly. Thus, the flange 332a and the diameter enlarged portion 332e of the rivet body 332b fasten the stopper body 331 and the inner column 11. At this time, the rivet body 332b is inflated in outer diameter, so clearance between each through-hole of the through-hole 11a of the inner column 11, the through-hole 331a of the stopper body 331 and the through-hole 333e of the electric conductive member 333, and the rivet body 332b, is eliminated.

As described above, fitting of the movable side stopper 300 to the inner column 11 is completed, as shown in Fig. 9D. In the movable side stopper 300, the cover member 334 is disposed at a rear side of the vehicle, and the blind rivet 332 is disposed at an opposite side to the cover member 334, that is, at a front side of the vehicle. According to the above described procedures, a work for pressing (press-fitting work) the projected portions of the stopper into the press-fit holes of the inner column, as performed in case of the conventional steering apparatus, becomes unnecessary, and moreover in the Procedure 2 the thick plate portion 331b of the stopper body 331 can be fitted easily in the rectangular hole 11c of the inner column 11, so fitting of the movable side stopper 300 onto the inner column 11 being able to be made with less steps, more easily and speedy. Further, no deformation of the inner column 11 is caused by press-fitting force.

Incidentally, in case where the above mentioned press-fitting work is conducted in the conventional steering apparatus, the stopper body would be disposed on the outer periphery of the inner column in an unstable state. On the contrary, according to the above described procedures, there is no press-fitting work as described, and the thick plate portion 331b of the stopper body 331 is fitted in the rectangular hole 11c of the inner column 11, whereby the stopper body 331 can be disposed on the outer periphery of the inner column 11 in a stable state. For this reason, in the Procedure 3, fastening and connecting (or caulking) of the blind rivet 332, can be conducted in a stable state, so incomplete caulking can be prevented.

Further, fitting of the movable side stopper 300 can be conducted from the outer periphery side of the outer column 11 in the same manner as in the case of the first embodiment, in other words, no assembling work from the inner periphery side of the inner column 11 is required, so the fitting work may be made easily. Moreover, each of constituent members of the movable side stopper 300 is simple in shape, so assembling work described in the above Procedure 1 is easy. Further, the stopper body 331, the conductive member 333 and the cover member 334 are made to be one assembly as described in the above Procedure 1, thereby particularly in the Procedure 2 described above handling becoming easy and work for fitting the thick plate portion 331b of the stopper body 331 into the rectangular hole 11c of the inner column 11 becoming more easy. Therefore, work for fitting the movable side stopper 300 onto the inner column 11 can be made more speedy and easily.

The through hole 331c of the stopper body 331 and the through hole 333e of the conductive member 333 are circular, and the through hole 331d of the stopper body 331 and the through hole 333f of the conductive member 333 are elliptical, in other words, they differing in shape, so in the above Procedure 1 the column-shaped project portion 334c of the cover member 334 can be prevented from being inserted into the through-hole 333e of the electric conductive member 333 and the through-hole 331c of the stopper body 331 erroneously. Accordingly, in the above mentioned Procedures 2 and 3, the blind rivet 332 can be prevented from erroneously inserted for fastening and connecting, into the through-hole 333f of the electric conductive member 333 and into the through-hole 331d of the stopper body 331. Meanwhile, the shape of the through-hole 331d of the stopper body 331 as well as the shape of the through-hole 333f of the electric conductive member 333 are not limited to elliptical but may be oval, rectangular or the like.

In the present embodiment, the thick plate portion 331b of the stopper body 331 is fitted in the rectangular hole 11c of the inner column 11, as described above. Accordingly, even if the movable side stopper 300, when the driver adjusts the telescopic position of the steering wheel, is brought into contact with the fixed side stopper 10e of the outer column 10 and receives a force in the forward or rearward direction, or even if the movable side stopper 300, when the driver steers the steering wheel in the key locked state, is brought into contact with the inner side surface of the guide groove portion and receives a force in a rotational direction, these forces are received by the surface 11d composing the rectangular hole 11c of the inner column 11, so the state where the movable side stopper 300 is fixed in the inner column 11 can be maintained. Therefore, restriction of the range of the telescopic adjustment of the inner column 11 with respect to the outer column 10, and prevention of relative rotation of the inner column 11 to the outer column 10 can be performed stably. Meanwhile, even in a case where the movable side stopper 300 receives a torsion force ( for example, a rotational force about the center of the blind rivet 332), that force can be received by the surface 11d composing the rectangular hole 11c of the inner column 11.

Moreover, the cover member 334 of the movable side stopper 300 is abutted to or opposed with a slight clearance to the surface 11d (the surface 11d at the rear side of the vehicle) composing the rectangular hole 11c of the inner column 11. With this configuration, the pawl portion 334d of the cover member 334 latched in the groove portion 331e of the stopper body 331 can be prevented from being disengaged from the groove portion 331e, and as a result the cover member 334 can be prevented from being removed out of the stopper body 331.

Further, in the present embodiment the electric conductive member 333 is provided with the arm portions 333c, 333c functioning as springs which deflect in the left and right directions of the vehicle, and the arm portions 333c, 333c are elastically contacted with the inner side surfaces of the guide groove portion 25, as shown in Fig.8. Accordingly, as shown in Fig. 8 and Fig. 9D, the inner side surfaces of the guide groove portion 25 and the arm portions 333c, 333c of the electric conductive member 333, the flange 332a of the blind rivet 332 and the flat portion 333a of the electric conductive member 333, the diameter enlarged portion 332e of the lower end of the rivet body 332b in the blind rivet 332 and the inner peripheral surface of the inner column 11 or further the rivet body 332b and the surface composing the through-hole 11a of the inner column 11, are respectively in contact with each other. With such configuration, the inner column 11 and the outer column 10 are electrically connected, and an electrifying path for a body earth from the steering wheel 101 to the vehicle body can be secured.

Further, the arm portions 333c, 333c of the electric conductive member 333 function as springs which deflect in the left and right directions of the vehicle, so when the driver releases the above mentioned unillustrated operation lever so as to perform the adjustment of the telescopic position of the steering wheel 101 or when the driver steers the steering wheel in the key locked state, generation of flapping noise caused by abutment or contact of the movable side stopper 300 with the inner side surface of the guide groove portion 25 of the outer column 10, can be effectively restrained.

Further, the cover member 334 of the movable side stopper 300 can prevent effectively flapping noise from being generated by abutting or hitting of the movable side stopper 300 with the fixed side stopper 10e of the outer column 10 when the driver releases the unillustrated operation lever to conduct the telescopic adjustment of the steering wheel 101 in the rearward direction of the vehicle. This effect can be attained also similarly by the cover member 34 of the movable side stopper 30 in the above mentioned first embodiment.

The tilt bracket 12, as shown in Fig.8, includes an unillustrated upper plate extended in the left-and-right direction and a pair of left and right side plates 72, 73 welded to the lower surface of the upper plate. The upper plate is fastened to the vehicle body by bolts and the like. Interval between the side plates 72 and 73 is so set to be slightly larger than the width of the outer column in the left-and-right direction of the vehicle in free state. The side plates 72 and 73 are formed with the elongated holes 72a and 73a for the tilt adjustment. The tilt adjustment elongated holes 72a and 73a are arc-shaped about the aforementioned pivot boss 22.

As shown in Fig.8, the lower portion of the tilt bracket is provided with a fastening mechanism 80 which serves for conducting tilt adjustment and telescopic adjustment of the steering column. The fastening mechanism 80 effects, in accordance with the driver's operation, fastening or releasing therefrom by a fastening bolt 81 inserted into the through-hole 28 formed through the clamp portions 10a, 10a of the outer column 10, thus performing of fixing of the tilt/telescopic position or releasing therefrom.

As shown in Fig.8, on the fastening bolt 81 and between a head portion thereof and the side plate 72 of the tilt bracket 12, an unillustrated operation lever to be rotated by the driver, a movable cam 83 rotated as a body with the operation lever, a fixed cam 84 whose right end is engaged non-rotatably with the tilt adjustment elongated hole 72a, are fitted. The opposed surfaces of the fixed cam 84 and the movable cam 83 are formed with inclined cam surfaces complimentarily shaped each other. The fixed cam 84 and the movable cam 83, in accordance with the rotation of the operation lever, are brought into engagement with each other and approach to release fastening by the fastening bolt 81, and repel from each other to move apart from each other to thereby generate tensioning force by the fastening bolt 81 and release the fastening.

Between the side plates 72, 73 of the tilt bracket and the outer column 10, on the fastening bolt 81 are fitted left and right each two friction plates 85 whose tip ends engage latch arms extended in the left-and-right direction of the vehicle from the lower stopper 50 described later (Refer to Fig. 7), and an intermediate friction plate 86 whose paired left and right end plate portions 86a, 86b which are respectively pinched by two friction plates 85 at both of left-and-right sides. The friction plate 85 is in engagement with the lower stopper 50 as describe before, so the increased number of the friction surfaces reinforces holding of the inner column 11 by the outer column 10.

Meanwhile, the friction plate 85 is formed with an elongated hole elongated in the front-and rear direction of the vehicle to allow movement of the fastening bolt 81 in the state where the fastening by the fastening bolt 81 is released, thereby enabling the telescopic adjustment. The intermediate friction plate 86 is formed at the center of the rectangular plate member thereof with a round hole through which the fastening bolt 81 passes, and has a configuration that a pair of left and right plate portions 86a and 86b which are in face-to-face contact with the friction plates 85 are connected by the connecting plate portion 86c.

As shown in Fig.8, at the outside of the side plate 73, the pressing plate 87 and the thrust bearing 88 are fitted on the fastening bolt 81, and those members are fastened together with other members by the nut 89 screwed onto the male screw 81a of the fastening bolt 81.

As shown in Fig.7, the lower surface of the portion, at the front side of the vehicle, of the inner column 11, is provided with the lower stopper 50 manufactured as an aluminum alloy die-cast molded product, with being loosely fitted in the slit portion 26. The front end of the lower stopper 50 is formed with a buffer holding portion 52 whose cross section cut along the axial direction and the up-and-down direction is substantially L-shaped, is projected downward. A buffer block 53 made of rubber is held by the buffer holding portion 52. The buffer block 53 restricts the telescopic adjustment range (shown by a symbol "TAf" in Fig.7), to the frontward of the vehicle, of the inner column 11.

The lower stopper 50 is fixed to the inner column 11 by a couple of front and rear resin pins 51, 51 lined in the front-and-rear direction of the vehicle. When a load caused upon a secondary collision is applied to the steering wheel 101, the load is transmitted through the upper steering shaft 62 to the inner column 11 and moves the inner column 11 in the frontward of the vehicle. On the other hand, the buffer holding portion 52 supported to the friction plate 85 does not move. With this configuration, shearing force is applied to the resin pins 51, 51, so the resin pins 51, 51 are sheared. Since the resin pins 51, 51 are sheared, the connection between the inner column 11 and the buffer holding portion 52 is released, and the inner column 11 takes a state where the inner column 11 undergoes friction force only caused between the inner column 11 and the outer column 10 and the movement in the axial direction is restricted. With this configuration, even in a case where the load caused upon the secondary collision is relatively small, the movement of the inner column 11 in the frontward of the vehicle is allowed, and the inner column 11 can move in the range shown by a symbol "CP", releasing the impact upon the secondary collision.

As shown in Fig.7, the steering shaft 3 is composed of the lower steering shaft 61 and the upper steering shaft 62 which are spline-joined each other in the steering column to be telescopically adjustable, and the output shaft 39 that is connected to the lower steering shaft 61 through a torsion bar 44. The steering shaft 3 is rotatably supported by the above mentioned ball bearing 29 fitted in the rear end portion of the inner column 11 and the ball bearing 37 fitted in the housing of the electric power assist mechanism 4.

The lower steering shaft 61 can be formed by rolling and broaching with a steel round bar used as a material, and includes a male spline 61a formed along an outer periphery of a rear half portion thereof in the front-and-rear direction of the vehicle. On the other hand, the upper steering shaft 62 can be formed by drawing and broaching with a steel pipe as a material, and includes a female spline 62a formed along an inner periphery of a front half portion in the front-and-rear direction of the vehicle and fitted on the male spline 61a of the lower steering shaft 61. A resin coating is applied over the male spline 61a of the lower steering shaft 61 in order to prevent a backlash with respect to the female spline 62a of the upper steering shaft 62. Meanwhile, the resin coating may be replaced by coating of low friction material.

The rear end of the upper steering shaft 62 is formed with a serration 62b, on which a boss of the steering wheel 101 (not shown in Fig. 7) is fitted.

With the above described configuration, when the driver rotates the unillustrated lever on the fastening side, a ridge of the inclined cam surface of the movable side cam 83 runs up onto a ridge of the inclined cam surface of the fixed cam 84, thereby pulling the fastening bolt 81 leftward on one hand and pressing the fixed cam 84 rightward on the other hand. This action causes the side plates 72 and 73 to fasten the clamp portions 10a and 10b of the outer column 10 from left and right sides to thereby restrict the steering column from moving in a tilt direction, and simultaneously the inner column 11 is restricted from moving in the axial direction by a fastening friction force generated for the outer column 10 to fasten the inner column 11 and a friction force generated on the fiction plates 85.

Whereas when the driver rotates the operation lever in the releasing direction, the side plates 72 and 73, of which interval is larger than the width of the outer column 10 in the free state, as described above, respectively return resiliently. This action cancels both of the restriction of the tilt-directional movement of the outer column 10 and the restriction of the axial directional movement of the inner column 11, thereby enabling the driver to conduct the positional adjustment of the steering wheel 101.

In this state, the user can move the steering wheel 101 in the rearward direction of the vehicle by an axial distance between the fixed side stopper 10e formed on the outer column 10 and the movable side stopper 300, as shown the symbol "TAr" in Fig. 7. When the movable side stopper 300 arrives at a predetermined position (that is a position moved in the rearward by "TAr") by the telescopic adjustment in the rearward direction, the movable side stopper 300 is brought into contact with the fixed side stopper 10e, thereby preventing movement of the steering wheel 101.

As described above, according to the present embodiment, it is possible to realize a steering apparatus 200, in which fitting of the movable side stopper 300 onto the inner column 11 can be made with less steps, speedy and easily, while preventing deformation of the inner column 11.

Meanwhile, fastening and connecting the stopper body 331 of the movable side stopper 300 and the inner column 11 can be maid by bolt and nut in place of the blind rivet 332. This is the same with respect to the first embodiment also.

### [Description of the Reference Numerals and Symbols]

- 1: steering mechanism
- 2, 200: steering apparatus
- 3: steering shaft
- 4: electric power assist mechanism
- 5: housing
- 10: outer column
- 10e: fixed side stopper
- 11: inner column
- 11a: through-hole
- 11b: press-fit hole
- 12: tilt bracket
- 13: holding cylindrical perforation
- 23, 24: guide wall
- 25: guide groove portion
- 26: slit portion
- 28: through-hole
- 30, 300: movable side stopper
- 31, 35, 331: stopper body
- 31c, 35a: projected portion
- 31d: removal preventing portion
- 31e: slit
- 32, 332: blind rivet
- 33, 333: electric conductive member
- 34, 334: cover member
- 39: output shaft
- 44: torsion bar
- 50: lower stopper
- 61: lower steering shaft
- 62: upper steering shaft
- 80: fastening mechanism
- 81: fastening bolt
- 83: movable cam
- 84: fixed cam
- 85: friction plate
- 86: intermediate friction plate
- 87: pressing plate
- 88: thrust bearing
- 89: nut
- 101: steering wheel
- 102: intermediate shaft
- 103: steering gear
- 104: tie rod

## Claims

1. A steering apparatus (200) comprising:
an outer column (10) being provided with a guide groove portion (25) extended in a front-and-rear direction of a vehicle;
an inner column (11) being provided with a stopper (300) guided by said guide groove portion (25) and fitted in the outer column (10) to be movable in the front-and-rear direction of the vehicle;
a steering shaft (3) supported rotatably in said outer column (10) and said inner column (11), on which a steering wheel (101) is to be attached; and
an adjustable range of a telescopic position of the steering wheel (101) being restricted by the stopper (300) being in contact with a portion, at a rear side end of the vehicle, of said guide groove portion (25),
wherein said stopper (300) comprises a stopper body (331) made of a metal or a resin and a fastening and connecting means (332) for fixing said stopper body (331) to said inner column (11),
wherein said stopper body (331) and said inner column (11) are formed, respectively, with through-holes (331c, 11a) communicated with each other, through which said fastening and connecting means (332) is inserted,
wherein said stopper body (331) is provided with a fitting portion (331b) that is fitted in a fitting hole (11c) formed through in said inner column (11),
**characterized in that**:
said stopper (300) further comprises an electric conductive member (333) for securing an electrifying path for performing a body earth,
wherein said electric conductive member (333) is formed with a through-hole (333e) communicated with said through-hole (331c) of said stopper body (331) and said through-hole (11a) of said inner column (11), through which said fastening and connecting means (332) is inserted,
wherein a cover member (334) made of a resin is provided to be attached to a portion, at the rear end of the vehicle, of said stopper body (331),
wherein said stopper body (331) is formed with a hole portion (331d) for attaching said cover member (334),
wherein said electric conductive member (333) is further formed with a through-hole (333f) for said cover member (334), that is communicated with said hole portion (331d) of said stopper body (331), and
wherein said cover member (334) is provided with a projected portion (334c) that is fitted in said through-hole (333f) for the cover member (334) of said electric conductive member (333) and said hole portion (331d) of said stopper body (331), said cover member (334) includes a horizontal portion (334a) that pinches said electric conductive member (333) with the stopper body (331), a latch portion (334d) that is to be latched to said stopper body (331) and a vertical portion (334b) extended over the side surface of said stopper body (331).

2. The steering apparatus (200) according to claim 1, wherein
said fastening and connecting means (332) includes a blind rivet.

3. The steering apparatus (200) according to claim 1, wherein
said through-hole (331c) and said hole portion (331d) of said stopper body (331), and said through-hole (333e) for said fastening and connecting means (332) and said through-hole (333f) for said cover member (334), of said electric conductive member (333) are, respectively, on the same planes; and
said through-hole (333e) of said electric conductive member (333) and said through-hole (331c) of said stopper body (331), and said through-hole (333f) for said cover member (334) of said electric conductive member (333) and said hole portion (331d) of said stopper body (331) are different in shape.

4. The steering apparatus (200) according to claim 3, wherein
said fitting hole (11c) formed in said inner column (11) is rectangular.

5. The steering apparatus (200) according to claim 4, wherein
said fastening and connecting means (332) includes a blind rivet; and
said electric conductive member (333) is in contact with said blind rivet contacting said inner column (11) and with said outer column (10), and secures an electrifying path from said inner column (11) to said outer column (10).

## Patentansprüche

1. Lenkvorrichtung (200), aufweisend:
eine Außensäule (10), die mit einem Führungsrillenabschnitt (25) versehen ist, der sich in einer Front-Heck-Richtung eines Fahrzeugs erstreckt;
eine Innensäule (11), die mit einem Anschlag (300) versehen ist, der von dem Führungsrillenabschnitt (25) geführt wird und in die Außensäule (10) eingepasst ist, um in der Front-Heck-Richtung des Fahrzeugs bewegbar zu sein;
eine Lenkwelle (3), die drehbar in der Außensäule (10) und der Innensäule (11) gelagert ist, an der ein Lenkrad (101) befestigt werden soll; und
wobei ein einstellbarer Bereich einer Teleskopposition des Lenkrads (101) durch den Anschlag (300), der an einem rückseitigen Ende des Fahrzeugs mit einem Abschnitt des Führungsrillenabschnitts (25) in Kontakt steht, begrenzt wird,
wobei der Anschlag (300) einen aus einem Metall oder einem Harz hergestellten Anschlagkörper (331) und ein Befestigungs- und Verbindungsmittel (332) zum Fixieren des Anschlagkörpers (331) an der Innensäule (11) aufweist,
wobei der Anschlagkörper (331) und die Innensäule (11) jeweils mit Durchgangslöchern (331c, 11a), die miteinander in Verbindung stehen, ausgebildet sind, durch die das Befestigungs- und Verbindungsmittel (332) eingesetzt wird,
wobei der Anschlagkörper (331) mit einem Passteil (331b) versehen ist, das in ein Passloch (11c) eingepasst ist, das durch die Innensäule (11) hindurch ausgebildet ist, **dadurch gekennzeichnet, dass**:
der Anschlag (300) ferner ein elektrisch leitfähiges Element (333) zum Sichern eines Elektrifizierungspfads zum Durchführen einer Körpererdung aufweist,
wobei das elektrisch leitfähige Element (333) mit einem Durchgangsloch (333e) ausgebildet ist, das mit dem Durchgangsloch (331c) des Anschlagkörpers (331) und dem Durchgangsloch (11a) der Innensäule (11) in Verbindung steht, durch das das Befestigungs- und Verbindungsmittel (332) eingesetzt ist,
wobei ein aus einem Harz hergestelltes Abdeckelement (334) bereitgestellt ist, um an der Rückseite des Fahrzeugs an einem Abschnitt des Anschlagkörpers (331) befestigt zu werden,
wobei der Anschlagkörper (331) mit einem Lochabschnitt (331d) zum Befestigen des Abdeckelements (334) ausgebildet ist,
wobei das elektrisch leitfähige Element (333) ferner mit einem Durchgangsloch (333f) für das Abdeckelement (334) ausgebildet ist, das mit dem Lochabschnitt (331d) des Anschlagkörpers (331) in Verbindung steht, und
wobei das Abdeckelement (334) mit einem vorstehenden Abschnitt (334c) versehen ist, der in das Durchgangsloch (333f) für das Abdeckelement (334) des elektrisch leitfähigen Elements (333) und den Lochabschnitt (331d) des Anschlagkörpers (331) eingepasst ist, das Abdeckelement (334) Folgendes aufweist: einen horizontalen Abschnitt (334a), der das elektrisch leitfähige Element (333) mit dem Anschlagkörper (331) einklemmt, einen Verriegelungsabschnitt (334d), der mit dem Anschlagkörper (331) verriegelt werden soll, und einen vertikalen Abschnitt (334b), der sich über die Seitenoberfläche des Anschlagkörpers (331) hinaus erstreckt.

2. Lenkvorrichtung (200) nach Anspruch 1, wobei
das Befestigungs- und Verbindungsmittel (332) einen Blindniet aufweist.

3. Lenkvorrichtung (200) nach Anspruch 1, wobei
sich das Durchgangsloch (331c) und der Lochabschnitt (331d) des Anschlagkörpers (331) und das Durchgangsloch (333e) für das Befestigungs- und Verbindungsmittel (332) und das Durchgangsloch (333f) für das Abdeckelement (334) des elektrisch leitfähigen Elements (333) jeweils auf den gleichen Ebenen befinden; und
das Durchgangsloch (333e) des elektrisch leitfähigen Elements (333) und das Durchgangsloch (331c) des Anschlagkörpers (331) und das Durchgangsloch (333f) für das Abdeckelement (334) des elektrisch leitfähigen Elements (333) und der Lochabschnitt (331d) des Anschlagkörpers (331) eine unterschiedliche Form aufweisen.

4. Lenkvorrichtung (200) nach Anspruch 3, wobei
das in der Innensäule (11) ausgebildete Passloch (11c) rechteckig ist.

5. Lenkvorrichtung (200) nach Anspruch 4, wobei
das Befestigungs- und Verbindungsmittel (332) einen Blindniet aufweist; und
das elektrisch leitfähige Element (333) mit dem Blindniet, der die Innensäule (11) berührt, und mit der Außensäule (10) in Verbindung steht und einen Elektrifizierungspfad von der Innensäule (11) zur Außensäule (10) sichert.

## Revendications

1. Appareil de direction (200) comprenant :
une colonne externe (10) munie d'une partie rainure de guidage (25) s'étendant dans une direction avant-arrière d'un véhicule ;
une colonne interne (11) munie d'une butée (300) guidée par ladite partie rainure de guidage (25) et montée dans la colonne externe (10) afin de pouvoir se déplacer dans la direction avant-arrière du véhicule ;
un arbre de direction (3) porté rotatif dans ladite colonne externe (10) et dans ladite colonne interne (11), sur lequel un volant (101) doit être fixé ; et
une plage réglable d'une position télescopique du volant (101) étant limitée par la butée (300) en contact avec une partie, au niveau d'une extrémité côté arrière du véhicule, de ladite partie rainure de guidage (25),
ladite butée (300) comprenant un corps (331) de butée en métal ou en résine, et un moyen de fixation et de liaison (332) permettant de fixer ledit corps (331) de butée à ladite colonne interne (11),
ledit corps (331) de butée et ladite colonne interne (11) étant munis, respectivement, de trous traversants (331c, 11a) en communication entre eux, à travers lesquels ledit moyen de fixation et de liaison (332) est introduit,
ledit corps (331) de butée étant muni d'une partie de montage (331b) ajustée dans un trou de montage (11c) formé à travers ladite colonne interne (11), **caractérisé en ce que** :
ladite butée (300) comprend en outre un élément conducteur électrique (333) permettant d'assurer un trajet d'électrisation servant à effectuer une mise à terre du corps,
ledit élément conducteur électrique (333) étant muni d'un trou traversant (333e) en communication avec ledit trou traversant (331c) dudit corps (331) de butée et ledit trou traversant (11a) de ladite colonne interne (11), à travers lesquels ledit moyen de fixation et de liaison (332) est introduit,
un élément de couverture (334) en résine étant disposé pour être fixé à une partie, au niveau de l'extrémité arrière du véhicule, dudit corps (331) de butée,
ledit corps (331) de butée étant muni d'une partie trou (331d) permettant de fixer ledit élément de couverture (334),
ledit élément conducteur électrique (333) étant muni en outre d'un trou traversant (333f) pour ledit élément de couverture (334), en communication avec ladite partie trou (331d) dudit corps (331) de butée, et
ledit élément de couverture (334) étant muni d'une partie en saillie (334c) ajustée dans ledit trou traversant (333f) pour l'élément de couverture (334) dudit élément conducteur électrique (333) et dans ladite partie trou (331d) dudit corps (331) de butée, ledit élément de couverture (334) comprenant une partie horizontale (334a) destinée à pincer ledit élément conducteur électrique (333) avec le corps (331) de butée, une partie loquet (334d) destinée à être verrouillée audit corps (331) de butée, et une partie verticale (334b) s'étendant sur la surface latérale dudit corps (331) de butée.

2. L'appareil de direction (200) selon la revendication 1, dans lequel ledit moyen de fixation et de liaison (332) comprend un rivet aveugle.

3. L'appareil de direction (200) selon la revendication 1, dans lequel
ledit trou traversant (331c) et ladite partie trou (331d) dudit corps (331) de butée, et ledit trou traversant (333e) pour ledit moyen de fixation et de liaison (332) et ledit trou traversant (333f) pour ledit élément de couverture (334), dudit élément conducteur électrique (333) sont, respectivement, sur les mêmes plans ; et
ledit trou traversant (333e) dudit élément conducteur électrique (333) et ledit trou traversant (331c) dudit corps (331) de butée, et ledit trou traversant (333f) pour ledit élément de couverture (334) dudit élément conducteur électrique (333) et ladite partie trou (331d) dudit corps (331) de butée, présentent des formes différentes.

4. L'appareil de direction (200) selon la revendication 3, dans lequel
ledit trou de montage (11c), formé dans ladite colonne interne (11), est rectangulaire.

5. L'appareil de direction (200) selon la revendication 4, dans lequel
ledit moyen de fixation et de liaison (332) comprend un rivet aveugle ; et
ledit élément conducteur électrique (333) est en contact avec ledit rivet aveugle se mettant en contact avec ladite colonne interne (11) et avec ladite colonne externe (10), et assure un trajet d'électrisation de ladite colonne interne (11) à ladite colonne externe (10).
